# EUROPÄISCHE PATENTSCHRIFT

(11) **EP 0 672 978 B1**
(45) Veröffentlichungstag und Bekanntmachung des Hinweises auf die Patenterteilung: **11.11.1998**
(21) Anmeldenummer: 95102063.5
(22) Anmeldetag: 15.02.1995
(51) Int. Cl.: G05D 23/19, G02F 1/15

(54) **Ionenpermeable, Infrarot-reflektierende Elektrode**
Ion-permeable, infrared reflective electrode
Electrode réflechissant l'infrarouge, perméable aux ions

(30) Priorität: 19.03.1994 DE 4409470
(43) Veröffentlichungstag der Anmeldung: 20.09.1995
(73) Patentinhaber: DORNIER GmbH, 88039 Friedrichshafen (DE)
(72) Erfinder: Meisel, Thomas, Dr., D-88697 Bermatingen (DE); Braun, Rüdiger, Dr., D-88048 Friedrichshafen (DE); Braig, Albert, Dipl.-Ing., D-88677 Markdorf (DE); Rothmund, Walter, Dr., D-88048 Friedrichshafen (DE); Schwarzott, Walter, Dipl.-Ing., D-88048 Friedrichshafen (DE); Scherber , Werner, Dr., D-88697 Bermatingen (DE)

(56) Entgegenhaltungen:
- EP-A- 0 272 428
- DE-A- 3 643 692
- DE-C- 3 643 691
- US-A- 4 618 218

## Beschreibung

Die Erfindung betrifft ein Schichtsystem mit steuerbarer Wärmeemission .

Der Wärmehaushalt eines Raumfahrzeuges wird im wesentlichen durch das Zusammenspiel dreier Effekte bestimmt: äußere Einstrahlung, vorwiegend von der Sonne und der Erde, innere Wärmequellen, z.B. elektrische Geräte, und Wärmeabstrahlung in den Raum.

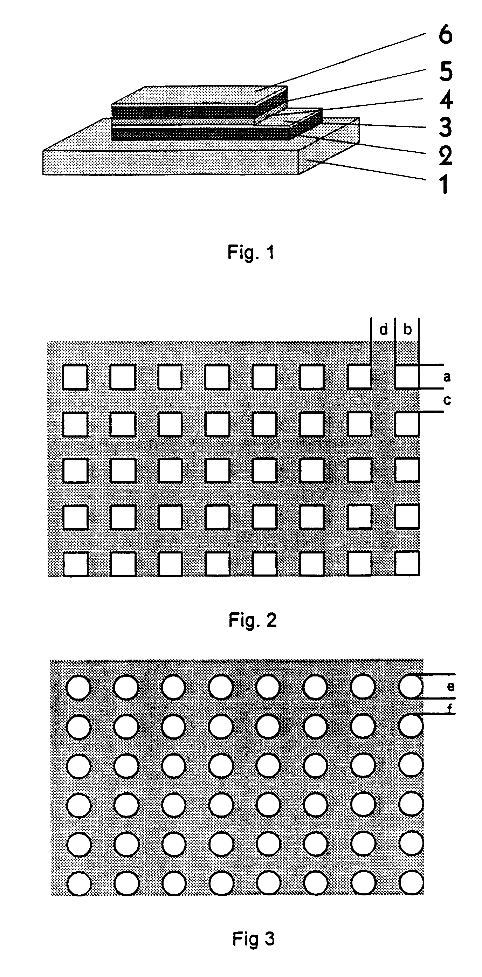

Schichtsysteme mit steuerbarer Wärmeemission, im folgenden auch elektroemissive Elemente genannt, ermöglichen die Steuerung der strahlungsbedingten Wärmeflüsse mit geringem Energieaufwand und ohne mechanische Funktionen. Ein zum Stand der Technik gehörendes elektroemissive Element (Fig.1) besteht aus einem Mehrschichtsystem auf einem infrarottransparenten Trägersubstrat 1. Das Schichtsystem (2, 3, 4, 5, 6) besteht mindestens aus einer elektroemissiven Schicht 2, der ionenpermeablen und infrarotreflektierenden Elektrode 3, einem Festelektrolyten 4, einer lonenspeicherschicht 5 und einer Rückelektrode 6.
Die Funktion des Bauelements beruht auf der elektrisch gesteuerten Veränderung der IR-Transmission der elektroemissiven Schicht vor einem "Infrarot-Spiegel". Die Oberfläche des Bauelements ist die in Fig. 1 unbeschichtet dargestellte Seite des Substrates. Wärmestrahlung durchtritt von dort das IR-transparente Substrat weitgehend ungehindert. Ist die elektroemissive Schicht 2 transmissiv, wird diese Wärmestrahlung von der dahinterliegenden Elektrode 3 reflektiert, das Element kann in diesem Fali selbst wenig Wärme emittieren. Ist die elektroemissive Schicht dagegen absorptiv geschaltet, so ist eine Reflexion der von außen auftreffenden Wärmestrahlung an der Elektrode 3 nicht mehr möglich, die Schicht 2 emittiert nun die ihrer Temperatur entsprechende Wärmestrahlung. Durch die Anordnung der Elektrode 3 zwischen der elektroemissiven Beschichtung 2 und dem IR-absorbierenden Festelektrolyten 4 wird eine Sichtbarmachung des IR-Effekts erst möglich.

An einem Beispiel mit Wolframoxid als elektroemissive Schicht 2 soll die Funktion des EE-Elements und die Aufgabe der Elektrode 3 näher erläutert werden:
Der infrarotoptische Schaltvorgang wird in der elektroemissiven Schicht durch einen elektrochemischen Prozeß verursacht. Ein negatives Potential an der Elektrode 3 führt, unter Aufnahme von Elektronen und gleichzeitiger Einlagerung von Ionen aus dem Elektrolyten, zur Reduktion der elektroemissiven Schicht 2. An der Rückelektrode 6 bzw. der Speicherschicht 5 läuft umgekehrt unter Abgabe von Elektronen und Ionen ein Oxidationsvorgang ab. Der elektronisch isolierende Festelektrolyt 4 übernimmt den notwendigen lonentransport zwischen der Speicherschicht 5, durch die Elektrode 3 hindurch, zur elektroemissiven Schicht 2. Das elektrische Feld zwischen den beiden Elektroden 3 und 6 ist die treibende Kraft für den Vorgang. Die reduzierte elektroemissive Schicht 2 ist IR-absorptiv und somit hoch emittierend.
Bei Anlegen eines positiven Potentials an die Elektrode 3 läuft der umgekehrte Vorgang ab. Die elektroemissive Schicht 2 wird unter Abgabe von Elektronen und Ionen oxidiert und gleichzeitig wird die Speicherschicht reduziert, die elektroemissive Schicht 2 wird transmissiv.

Aus DE 36 43 691 und DE 36 43 692 sind elektrooptische Bauelemente bekannt, deren Wärmeemissionsgrad durch Anlegen einer elektrischen Spannung in einen hoch oder durch Umpolung in einen nieder emittierenden Zustand geschaltet werden können. Diese Bauelemente eignen sich vorwiegend für militärische Anwendungen zur Tarnung und für zivile Anwendungen, z.B. als regelbare Thermalkontrollschicht für Raumfahrzeuge und Satelliten. Diese Systeme leiden unter dem Nachteil, daß die lonentransparenz der Elektrode 3 im wesentlichen durch die Diffusion einer löslichen Spezies, z.B. Protonen (H⁺), in Edelmetallschichten (Palladium, Gold) und/oder durch die Mikroporosität dünner Goldschichten auf einer rauhen Unterlage (im vorliegenden Fall: die elektroemissive Schicht 2) gelöst wird. Treibende Kraft für die Diffusion durch die Elektrode 3 ist der je nach Polung auftretende Konzentrationsgradient zwischen elektroemissiver Schicht 2 und Festelektrolyt 4. Der Konzentrationsgradient entsteht durch die Anreicherung oder Abreicherung von Ionen des Festelektrolyten bei angelegtem elektrischen Feld in nächster Umgebung der Elektrode 3. Die zur Ansteuerung notwendige Spannung von deutlich über 1 Volt führt bei wasserhaltigen Elektrolyten (z.B. wasserhaltige polymere Festelektrolyte mit Lithiumleitsalz) zu unerwünschten Nebenreaktionen an der Elektrode 3 (z.B. Wasserstoffentwicklung), wodurch die Lebensdauer des Bauelements auf unter 100 Schaltzyklen begrenzt wird. Niedrigere Spannungen im Bereich 0,7 bis 1 Volt ermöglichen nur einen geringen Emissionshub von unter 25 % (Δε_{typ} = 0,4 .. 0,65) und Schaltzeiten von ca. 15 Minuten bei 22°C.

Aufgabe der Erfindung ist es, eine verbesserte Anordnung und Strukturierung der bekannten Schichtsysteme mit steuerbarer Wärmeemission zu schaffen, die allen im folgenden genannten Anforderungen genügt:
- keine Beeinträchtigung der Elektrodenfunktion der Elektrode 3, das heißt hohe elektronische Leitfähigkeit über die gesamte Fläche,
- hohe Permeabilität für Ionen, das heißt kein wesentlicher Widerstand gegen lonenfluß,
- optimaler Kontakt zwischen Festelektrolyt 4 und elektroemissiver Schicht 2,
- optimale Reflektivität der Elektrode 3 im Wellenlängenbereich > 2, 5 µm in Richtung elektroemissive Schicht 2.

Diese Aufgabe wird durch die Vorrichtung nach Anspruch 1 gelöst. Vorteilhafte Ausführungsformen sind Gegenstand weiterer Ansprüche.

Die erfindungsgemäße Lösung betrifft insbesondere die ionenpermeable, IR-reflektierende Elektrode. Erfindungsgemäß ist diese derart strukturiert, daß sie mit homogen über die Elektrodenfläche verteilten, nicht zusammenhängenden Durchbrechungen versehen ist, deren maximale ebene Dimension kleiner als 10 µm ist. Die Strukturierung erfolgt derart, daß ein Ionentransport zwischen elektroemissiver Schicht und Festelektrolyt ermöglicht wird und zugleich ein hohes Reflexionsvermögen für Strahlung der Wellenlängen > 2,5 µm erreicht wird.

Vorteilhaft wird die Strukturierung der Elektrode nach an sich bekannten Methoden der Mikrostrukturierung durchgeführt, wie sie z.B. für die Strukturierung von Halbleiterbauelementen angewandt werden.

Für die Abmessungen der Durchbrechungen in der ionenpermeablen, IR-reflektierenden Elektrode gelten folgende Zusammenhänge: Vorteilhaft sollten die Dimensionen der Durchbrechungen kleiner sein als die Wellenlängen der zu reflektierenden Strahlung. Da in konkreten Anwendungen natürlich niemals ein scharf abgegrenzter Wellenlängenbereich der einfallenden Strahlung vorliegt, genügt es in der Praxis, daß die Abmessungen der Durchbrechungen kleiner sind als diejenigen Wellenlängen, die zusammen einen wesentlichen Teil der Gesamtintensität der einfallenden und zu reflektierenden IR-Strahlung ausmachen.
Die einfallende Wellenlängenverteilung entspricht in der Regel der Strahlung eines schwarzen Körpers. Bei einer geeigneten Dimensionierung der Durchbrechungen im Bereich von kleiner oder gleich 10 µm gelingt es, über einen großen Bereich von Einsatztemperaturen eine ausreichende Reflektivität der Elektrode für IR-Strahlung zu erzielen.
Die untere Grenze der Durchmesser für die Durchbrechungen wird im wesentlichen bestimmt durch die heute möglichen Methoden der Mikrostrukturierung.

Geeignete Materialien für die ionenpermeable, Infrarot-reflektierende Elektrode sind alle leitfähigen Stoffe wie Metalle und Halbleiter mit hohem Reflexionsvermögen für Infrarotstrahlung (insbesondere > 2,5 µm. Beispiele hierfür sind insbesondere Metalle wie Au, Ag, Pt, Pd, Al, Cu, Fe, Pb, Ni, Cr und Mischungen davon und Halbleiter wie geeignet dotiertes Si, Ge sowie Indiumoxid, Zinnoxid, Zinkoxid und Mischungen davon. In einer besonders vorteilhaften Ausführungsform besteht die Elektrode aus einer Dreifachschicht aus Ti/Au/Ti. Die beiden Ti-Schichten dienen als Haftgrund zu den jeweiligen Nachbarschichten (elektroemissive Schicht, Festelektrolyt).

Die Schichtdicke der ionenpermeablen, Infrarot-reflektierenden Elektrode liegt bevorzugt im Bereich von ca. 0,1 µm bis 1 µm. Derartige Schichten besitzen den Vorteil erhöhter mechanischer Stabilität und erhöhter elektronischer Leitfähigkeit. Demgegenüber sind poröse Elektroden wie z.B. nach der DE 36 43 691 C1, wesentlich dünner (ca. 0,01 µm). Dort erfolgt der Transport der Ionen durch die Elektrode hauptsächlich durch die Poren der Elektrode hindurch. Zur Gewährleistung einer ausreichenden Porosität müssen diese Elektroden entsprechend dünn sein, mit den daraus resultierenden negativen Folgen für Leitfähigkeit und mechanische Stabilität.

Die Erfindung wird anhand von Fig. näher erläutert. Es zeigen:
- Fig. 1: den prinzipiellen Aufbau eines Schichtsystems mit steuerbarer Wärmeemission
- Fig 2, 3:: jeweils eine Ausführungsform der ionenpermeablen, IR-reflektierenden Elektrode eines erfindungsgemäßen Schichtsystems
- Fig. 4:: den Aufbau eines Schichtsystems mit zusätzlicher IR-transparenter Elektrode
- Fig. 5:: eine Ausführungsform der zusätzlichen IR-transparenten Elektrode

In den Fig. 2 und 3) sind zwei mögliche Ausführungsformen für die Strukturierung der ionenpermeablen, Infrarot-reflektierenden Elektrode dargestellt. Sie wurden durch Anwendung an sich bekannter Methoden der Mikrostrukturierung erhalten. Die quadratischen bzw. kreisförmigen Durchbrechungen sind homogen über die Elektrodenfläche verteilt. Dies kann z.B. dadurch erreicht werden, daß - wie in den Fig. 2 und 3 dargestellt - die Abstände zwischen den Öffnungen in engen Toleranzen (typisch +/-10 %) identisch gewählt werden. Die Öffnungen sind derart gestaltet, daß ein möglichst hohes Öffnung-zu-Fläche-Verhältnis (z.B. Fig. 2: (axb) / ((a+c) x (b+d)) erreicht wird, ohne die Reflektivität im Infraroten (λ > 2,5 µm) zu beeinträchtigen. Diese Forderung läßt sich erfüllen, wenn die Dimensionen der Öffnungen a, b bzw. e möglichst weit unterhalb der kleinsten relevanten Lichtwellenlänge liegen.

Die Strukturierung muß darüberhinaus derart vorgenommen werden, daß die strukturierte Elektrode weiterhin über die gesamte Elektrodenfläche elektronisch leitfähig bleibt. Zum Beispiel müssen Durchbrechungen in der Art eines langgestreckten Schlitzes über annähernd die gesamte Elektrodenfläche vermieden werden.

Durch die Öffnungen können die Ladungsträger ungehindert vom Elektrolyten in die elektroemissive Schicht diffundieren. Um einen ausreichenden lonentransport durch die Elektrode zu gewährleisten, muß die Gesamtfläche der Öffnungen mindestens 5 % der Elektrodenfläche betragen. Vorteilhaft können die Öffnungen mit einem ionenleitenden Material gefüllt werden.

Elektroemissive Elemente mit dieser ionenpermeablen, Infrarot-reflektierenden Elektrode erreichen eine Steuerbarkeit des Emissionsvermögens von über 40 % und Schaltzeiten unter 10 Minuten bei 22°C.
Höhere Ansteuerspannungen (> 1,4 V) sind bei gleichzeitiger Steigerung der Lebensdauer der elektroemissive Elemente um mindestens zwei Größenordnungen und deutlicher Verkürzung der Schaltzeit möglich.

### Beispiel für die Herstellung der ionenpermeablen, infrarotreflektierenden Elektrode

Die zu strukturierende Elektrode des elektroemissiven Elements besteht aus einer Dreifachschicht aus Ti/Au/Ti. Alle drei Schichten werden elektronenstrahlverdampft und sind 10/120/20 nm dick. Die Strukturierung der 3 µm großen Löcher wird mit den gängigen Methoden der Fotolithografie durchgeführt. Im Anschluß wird die obere Ti-Schicht mit einer Ätzlösung aus 10 ml HF (30%), 40 ml HNO₃ (65%) und 200 ml H₂O selektiv abgeätzt. Die so strukturierte Ti-Schicht dient nun zusammen mit dem Fotolack als Maske beim Ätzen der Au-Schicht. Das Au wird ebenfalls selektiv mit einer Lösung von 1 g CrO₃ auf 100 ml HCI (32%) geätzt. Als letzter Schritt wird das Ti der unteren Schicht in den Löchern des Au entfernt und der Fotolack in Aceton abgewaschen. Die Prozeßführung erlaubt eine sehr gute Abbildungstreue der Lackmaske ohne die sonst nur schwer zu vermeidenden Unterätzungen.

Im folgenden sind anhand von Beispielen die erzielbaren Reflexionswerte für verschiedene ionenpermeable, Infrarot-reflektierende Ausführungsformen aufgeführt:

Beispiel 1: quadratische Öffnungen (Fig. 2) a x a (a=b) mit 3 µm Kantenlänge und 3 µm Abstand (c, d) in einer 200 nm dicken Schicht aus Gold ergeben ein Reflexionsvermögen für die ionenpermeable, Infrarot-reflektierende Elektrode bei einer Wellenlänge λ =10 µm der zu reflektierenden Strahlung von ca. 77 %.

Beispiel 2: quadratische Öffnungen (Fig. 2) a x a (a=b) mit 3 µm Kantenlänge und 10 µm Abstand (c, d) in einer 200 nm dicken Schicht aus Gold ergeben ein Reflexionsvermögen für die ionenpermeable, Infrarot-reflektierende Elektrode 3 bei λ 10 µm von ca. 95 %.

Beispiel 3: runde Öffnungen (Fig. 3) mit 3 µm Durchmesser e und 3 µm Abstand f in einer 200 nm dicken Schicht aus Gold ergeben ein Reflexionsvermögen für die ionenpermeable, Infrarot-reflektierende Elektrode 3 bei λ 10 µm von ca. 80 %.

Beispiel 4: runde Öffnungen (Fig. 3) mit 3 µm Durchmesser e und 10 µm Abstand f in einer 200 nm dicken Schicht aus Gold ergeben ein Reflexionsvermögen für die ionenpermeable, Infrarot-reflektierende Elektrode 3 bei λ 10 µm von ca. 95 %.

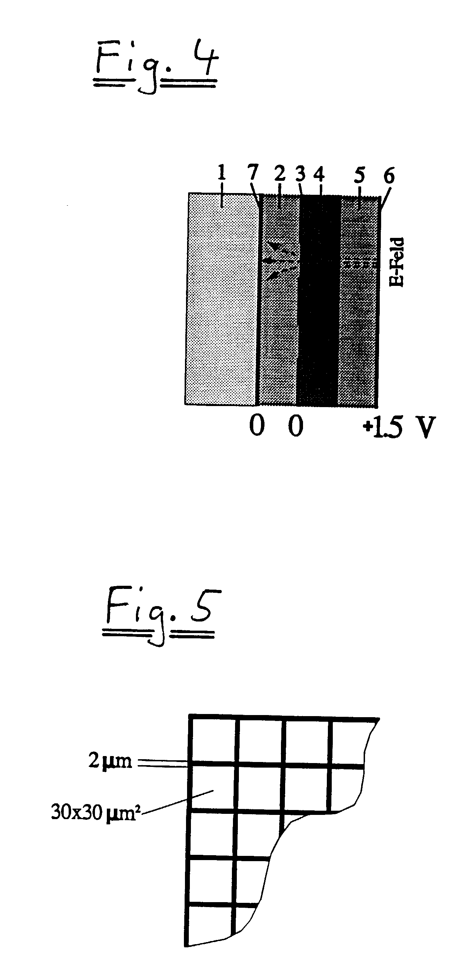

Um die Bewegung der Ionen vom Festelektrolyten in die elektroemissive Schicht weiter zu unterstützen, kann vorteilhaft zwischen dem IR-transparenten Trägersubstrat und der elektroemissiven Schicht eine zusätzliche IR-transparente Elektrode vorhanden sein.
Ein derartiges Schichtsystem ist in Fig. 4 dargestellt (gleiche Bezugsziffern in Fig. 4 und Fig. 1 entsprechen den gleichen Elementen). Am unteren Rand der Darstellung ist das elektrische Potential der beteiligten Elektroden aufgetragen. Die Elektrode 7, im weiteren auch Frontelektrode genannt, zwischen Trägersubstrat 1 und der elektroemissiven Schicht 2 dient dazu, die Bewegung der Ionen (z.B. Li⁺ -Ionen) vom Festelektrolyten 4 in die elektroemissive Schicht 2 hinein zu unterstützen. Sie wird elektrisch auf dem gleichen Potential gehalten wie die ionenpermeable, IR-reflektierende Elektrode 3, um so durch die Öffnungen der Elektrode 3 hindurch einen Durchgriff des elektrischen Feldes hervorzurufen, so daß die Li⁺- lonen entlang dieser Feldlinien direkt in die elektroemissive Schicht 2 injiziert bzw. ihr entzogen werden. Da die Frontelektrode 7 IR-transparent sein muß, ist sie mit Durchbrechungen versehen. Vorteilhaft ist sie als weitmaschiges Gitter ausgebildet. Eine derartige gitterförmige Ausbildung der Frontelektrode zeigt Fig. 5. Das Gitter ist hier aufgebaut aus z.B. 2 µm breiten Streifen, wobei der Abstand der Streifen in diesem Beispiel 30 µm beträgt. Diese weit auseinanderliegenden dünnen Streifen bilden eine Struktur, die für IR-Strahlung mit einer Wellenlänge von 10 µm praktisch transparent ist.
Die Frontelektrode ist wie die ionenpermeable, IR-reflektierende Elektrode 3 aus einem Schichtpaket aus Ti/Au/Ti (10/120/20 nm dick) aufgebaut und wird nach dem gleichen Verfahren wie diese strukturiert.

Bevorzugte Materialien für die einzelnen Schichten des erfindungsgemäßen Schichtsystem mit steuerbarer Wärmeemission sind z.B.:
**Substrat:** Silizium Si, Germanium Ge, Zinksulfid ZnS, Zinkselenid ZnSe, Bariumfluorid BaF, Calziumfluorid CaF, Polyethylen PE, Polypropylen PP, Polytetrafluorethylen PTFE
**Festelektrolyt:** Lithiumniobat LiNb₂O₃, Lithiumtantalat LiTa₂O₃, Lithiumborat LiB₂O₃
**Ionenspeicherschicht:** Wolframoxid WO₃, Manganoxid MnO₂, Graphit C, Polyanilin, Nickeloxid Ni₂O₃, Iridiumoxid IrO₂, Molybdänoxid MoO₃, Indiumzinnoxid In₂O₃/SnO₂
**elektroemissive Schicht:** Polyanilin, Nickeloxid Ni₂O₃, Iridiumoxid IrO₂, Molybdänoxid MoO₃, Indiumzinnoxid In₂O₃/SnO₂
**Rückelektrode, Frontelektrode:** hierfür eingen sich insbesondere die Materialien, die für die ionenpermeable, IR-reflektierende Elektrode genannt worden sind.

Die Anwendung der Erfindung ist nicht nur auf die Elemente zur Thermalsteuerung von Raumfahrzeugen beschränkt, sie eignet sich auch als Komponente
- in Elementen zur Infrarottarnung von militärischem Gerät,
- eines Bildpunkts von Infrarot-Displays,
- in Elementen zur Erzeugung von Infrarotsignaturen für die unsichtbare und vorübergehende Identifikation von Gegenständen,
- in Elementen zur Steuerung von thermischen Strahlungsflüssen.

## Patentansprüche

1. Schichtsystem mit steuerbarer Wärmeemission, umfassend
- ein IR-transparentes Trägersubstrat (1),
- eine Schicht (2) mit steuerbarer IR-Transmission,
- eine ionenpermeable, IR-reflektierende Elektrode (3),
- einen Festelektrolyten (4),
- eine lonenspeicherschicht (5),
- eine Rückelektrode (6),
**dadurch gekennzeichnet**, daß die ionenpermeable, IR-reflektierende Elektrode (3) derart strukturiert ist, daß sie mit homogen über die Elektrodenfläche verteilten, nicht zusammenhängenden Durchbrechungen versehen ist, deren maximale ebene Dimension kleiner als 10 µm ist.

2. Schichtsystem nach Anspruch 1, **dadurch gekennzeichnet**, daß die Abstände der Durchbrechungen untereinander konstant sind.

3. Schichtsystem nach einem der vorangehenden Ansprüche, **dadurch gekennzeichnet**, daß die ionenpermeable, IR-reflektierende Elektrode (3) aus einem leitfähigen Material besteht, das für Infrarotlicht einer Wellenlänge größer als 2,5 um reflektierend ist.

4. Schichtsystem nach einem der vorangehenden Ansprüche, **gekennzeichnet dadurch**, daß die ionenpermeable, IR-reflektierende Elektrode (3) aus einem der folgenden Materialien besteht:
- Metalle wie Au, Ag, Pt, Pd, Al, Cu, Fe, Pb, Ni, Cr oder Mischungen davon oder
- Halbleiter wie dotiertes Si, Ge sowie Indiumoxid, Zinnoxid, Zinkoxid oder Mischungen davon.

5. Schichtsystem nach einem der vorangehenden Ansprüche, **dadurch gekennzeichnet**, daß die Fläche der Durchbrechungen der ionenpermeablen, IR-reflektierenden Elektrode (3) mindestens 5% der Elektrode beträgt.

6. Schichtsystem nach einem der vorangehenden Ansprüche, **dadurch gekennzeichnet**, daß die Durchbrechungen auf der ionenpermeablen, IR-reflektierenden Elektrode (3) derart angeordnet sind, daß die Elektrode über die gesamte Elektrodenfläche elektronisch leitfähig ist.

7. Schichtsystem nach einem der vorangehenden Ansprüche, **dadurch gekennzeichnet**, daß die Durchbrechungen der ionenpermeablen, IR-reflektierenden Elektrode (3) mit einem ionenleitfähigen Material gefüllt sind.

8. Schichtsystem nach einem der vorangehenden Ansprüche, **dadurch gekennzeichnet**, daß die Schichtdicke der ionenpermeablen, IR-reflektierenden Elektrode (3) größer als 0,1 um und kleiner als 1 um ist.

9. Schichtsystem nach einer der vorangehenden Ansprüche, **dadurch gekennzeichnet**, daß zwischen dem IR-transparenten Trägersubstrat und der Schicht mit steuerbarer IR-Transmission eine IR-transparente Elektrode vorhanden ist.

10. Schichtsystem nach Anspruch 9, **dadurch gekennzeichnet**, daß die IR-transparente Elektrode Durchbrechungen aufweist.

11. Schichtsystem nach Anspruch 10, **dadurch gekennzeichnet**, daß die minimale ebene Dimension der Durchbrechungen im Bereich zwischen 20 und 100 µm liegt.

## Claims

1. Layer system having controllable heat emission, comprising
- an IR-transparent carrier substrate (1),
- a layer (2) having controllable IR transmission,
- an ion-permeable, IR-reflective electrode (3),
- a solid electrolyte (4),
- an ion storage layer (5),
- a rear electrode (6),
**characterised in that** the ion-permeable, IR-reflective electrode (3) is fabricated so that it is provided with discontinuous apertures distributed homogeneously over the electrode surface, the maximum dimension of which apertures is less than 10 µm in the plane.

2. Layer system according to claim 1, **characterised in that** the spacings of the apertures from one another are constant.

3. Layer system according to any one of the preceding claims, **characterised in that** the ion-permeable, IR-reflective electrode (3) consists of a conductive material that is reflective for infrared light of a wavelength greater than 2.5 µm.

4. Layer system according to any one of the preceding claims, **characterised in that** the ion-permeable, IR-reflective electrode (3) consists of one of the following materials:
- metals, such as Au, Ag, Pt, Pd, Al, Cu, Fe, Pb, Ni, Cr or mixtures thereof or
- semiconductors, such as doped silicon, Ge and indium oxide, tin oxide, zinc oxide or mixtures thereof.

5. Layer system according to any one of the preceding claims, **characterised in that** the area of the apertures in the ion-permeable, IR-reflective electrode (3) amounts to at least 5% of the electrode.

6. Layer system according to any one of the preceding claims, **characterised in that** the apertures on the ion-permeable, IR-reflective electrode (3) are arranged so that the electrode is electronically conductive over the entire electrode surface.

7. Layer system according to any one of the preceding claims, **characterised in that** the apertures of the ion-permeable, IR-reflective electrode (3) are filled with an ion-conductive material.

8. Layer system according to any one of the preceding claims, **characterised in that** the layer thickness of the ion-permeable, IR-reflective electrode (3) is greater than 0.1 µm and less than 1 µm.

9. Layer system according to any one of the preceding claims, **characterised in that** an IR-transparent electrode is disposed between the IR-transparent carrier substrate and the layer having controllable IR-transmission.

10. Layer system according to claim 9, **characterised in that** the IR transparent electrode has apertures.

11. Layer system according to claim 10, **characterised in that** the minimum dimension of the apertures in the plane is in the range between 20 and 100 µm.

## Revendications

1. Système multicouche à émission thermique contrôlée, comprenant :
- un substrat porteur (1) transparent aux infrarouges
- une couche (2) à transmission infrarouge contrôlée
- une électrode (3) réfléchissant les infrarouges, perméable aux ions,
- un électrolyte solide (4),
- une couche d'accumulation d'ions (5),
- une électrode arrière (6),
caractérisé en ce que l'électrode (3) réfléchissant les infrarouges, perméable aux ions est structurée de façon à être pourvue de passages non communiquants qui sont répartis de manière homogène à la surface de l'électrode et dont la dimension plane maximale est inférieure à 10 µm.

2. Système multicouche selon la revendication 1, caractérisé en ce que l'écartement mutuel des passages est constant.

3. Système multicouche selon une des revendications précédentes, caractérisé en ce que l'électrode (3) réfléchissant les infrarouges, perméable aux ions est réalisée en un matériau conducteur qui est réfléchissant pour la lumière infrarouge d'une longueur d'onde supérieure à 2,5 µm.

4. Système multicouche selon une des revendications précédentes, caractérisé en ce que l'électrode (3) réfléchissant les infrarouges, perméable aux ions est réalisée dans l'un des matériaux suivants :
- métaux tels que Au, Ag, Pt, Pd, Al, Cu, Fe, Pb, Ni, Cr ou des combinaisons de ceux-ci, ou
- semi-conducteurs tel que Si dopé, Ge ainsi que oxyde d'indium, oxyde stannique, oxyde de zinc ou des combinaisons de ceux-ci.

5. Système multicouche selon une des revendications précédentes, caractérisé en ce que la superficie des passages de l'électrode (3) réfléchissant les infrarouges, perméable aux ions correspond au moins à 5 % de l'électrode.

6. Système multicouche selon une des revendications précédentes, caractérisé en ce que les passages ménagés sur l'électrode (3) réfléchissant les infrarouges, perméable aux ions sont disposés de façon que l'électrode ait une conductibilité électronique sur toute sa superficie.

7. Système multicouche selon une des revendications précédentes, caractérisé en ce que les passages de l'électrode (3) réfléchissant les infrarouges, perméable aux ions sont remplis d'un matériau à conductibilité ionique.

8. Système multicouche selon une des revendications précédentes, caractérisé en ce que l'épaisseur de couche de l'électrode (3) réfléchissant les infrarouges, perméable aux ions est supérieure à 0,1 µm et inférieure à 1 µm.

9. Système multicouche selon une des revendications précédentes, caractérisé en ce qu'une électrode transparente aux infrarouges est disposée entre le substrat porteur transparent aux infrarouges et la couche à transmission infrarouge contrôlée.

10. Système multicouche selon la revendication 9, caractérisé en ce que l'électrode transparente aux infrarouges comporte des passages.

11. Système multicouche selon la revendication 10, caractérisé en ce que la dimension plane minimale des passages est comprise entre 20 et 100 µm.
